# EUROPÄISCHE PATENTSCHRIFT

(11) **EP 0 445 583 B1**
(45) Veröffentlichungstag und Bekanntmachung des Hinweises auf die Patenterteilung: **12.01.1994**
(21) Anmeldenummer: 91102442.0
(22) Anmeldetag: 20.02.1991
(51) Int. Cl.: A01B 49/02

(54) **Bodenbearbeitungsgerät**
Groundworking implement
Machine pour travailler le sol

(30) Priorität: 08.03.1990 DE 9002700 U
(43) Veröffentlichungstag der Anmeldung: 11.09.1991
(73) Patentinhaber: Rabewerk GmbH + Co., 49152 Bad Essen (DE)
(72) Erfinder: Warnking, Richard, Dipl.-Ing., W-4515 Bad Essen (DE)
(74) Vertreter: Missling, Arne, Dipl.-Ing.

(56) Entgegenhaltungen:
- WO-A-86/01680
- AU-B- 542 978
- AU-B-58 706 /86
- DE-A- 3 004 576
- DE-U- 8 913 171
- FR-A- 2 521 817
- US-A- 3 768 425

## Beschreibung

Die Erfindung bezieht sich auf ein Bodenbearbeitungsgerät gemäß dem Oberbegriff des Patentanspruchs 1 (DE-U-39 13 171. 1).

Ein Bodenbearbeitungsgerät der obengenannten Art dient dazu, den mittels einer vorgeordneten Bodenbearbeitungsmaschine zu einem Saatbeet vorbereiteten Boden in gezielter Weise zu verfestigen und das Saatgut einzubringen. Es hat sich dabei als besonders günstig herausgestellt, die Walze aus einzelnen Walzenelementen aufzubauen, welche jeweils nur den Bodenstreifen verfestigen oder verdichten, in welchen nachfolgend das Saatgut eingelegt wird. Alternativ dazu ist es auch möglich, das Saatgut in nicht verdichtete Bodenstreifen einzulegen, welche von seitlichen, durch ein Paar von Walzenelementen verdichteten Bodenstreifen begrenzt wird.

Um die Verdichtung der Bodenstreifen in gezielter und kontrollierter Weise vornehmen zu können, sind die Walzenelemente jeweils an einem schwenkbar gelagerten Tragarm höhenverstellbar angeordnet und können somit einzeln und separat gegen die Bodenoberfläche vorgespannt werden. Dies führt zu dem Ergebnis, daß stets gleiche Arbeitsbedingungen für das nachfolgende Säschar vorliegen, so daß das Saatgut stets in gleicher Arbeitstiefe in einen in gleicher Weise verdichteten Bodenbereich eingebracht wird.

Der Aufbau einer Walze aus einzelnen Walzenelementen bietet weiterhin den Vorteil, daß die Walzenelemente einzeln Bodenhindernissen, beispielsweise Steinen ausweichen können, so daß benachbarte Walzenelemente nicht aus ihrer Arbeitslage verschwenkt werden, so wie dies bei einer starren, durchgehenden Walze der Fall wäre.

Bodenbearbeitungsgeräte der genannten Art sind beispielsweise aus der DE-PS 8350, der DE-OS 37 05 952 oder der DE-OS 25 28 930 bekannt. Bei all diesen Geräten ist jedoch eine gleichmäßige Bodenverdichtung nicht sichergestellt.

Weiterhin ergibt sich bei den bekannten Bodenbearbeitungsgeräten der Nachteil, daß die radartigen Walzenelemente nur nach oben ausweichen können, wenn sie auf feststehende Bodenhindernisse, beispielsweise Steine, auftreffen. Diese Ausweichbewegung erfolgt gegen die Kraft eines Belastungs- oder Vorspannelementes. In der Praxis treten jedoch an der Oberfläche des Erdbodens auch Senken auf, d.h. insbesondere Bodenbereiche relativ kleiner Abmessungen, welche nur einzelne der Walzenelemente beeinflussen. Da die Walzenelemente gemäß dem Stand der Technik gegen Anschläge vorgespannt sind, besteht keine Möglichkeit, daß die radartigen Walzenelemente bei Auftreffen auf eine Senke weiter nach unten bewegt oder verschwenkt werden. Die Walzenelemente drücken somit nicht in gewünschter Weise auf die Bodenoberfläche und hinterlassen somit im Bereich der Senke unverdichtete Bodenstreifen, in welche das Saatgut durch das nachfolgende Säschar nicht in gewünschter Weise eingebracht wird.

Der Erfindung liegt die Aufgabe zugrunde, ein Bodenbearbeitungsgerät der eingangs genannten Art zu schaffen, welches bei einfachem Aufbau und betriebssicherer Handhabbarkeit eine vorgegebene Bodenbearbeitung auch im Bereich von Bodensenken gewährleistet.

Erfindungsgemäß wird die Aufgabe durch eine Vorrichtung gemäß dem Anspruch 1 gelöst.

Das erfindungsgemäße Bodenbearbeitungsgerät zeichnet sich durch eine Reihe erheblicher Vorteile aus. Durch die erfindungsgemäße Art der Lagerung des Walzenelementes kann dieses, wenn es auf feststehende Bodenhindernisse, beispielsweise Steine, auftrifft, nach oben dadurch ausweichen, daß die vorgegebene Vorspannung des Anschlags überwunden wird. Das einzelne Walzenelement kann somit verschwenkt werden, ohne daß sich dadurch die gesamte Abstützung des Bodenbearbeitungsgerätes, insbesondere eines vorgeordneten Vorgerätes, beispielsweise einer Kreiselegge, ändert. Während der üblichen Betriebsweise wird das Walzenelement gegen den Anschlag angelegt, so daß die durch die einzelnen Walzenelemente gebildete Walze das Bodenbearbeitungsgerät abstützt. Weiterhin ist durch das Gesamtgewicht der Anordnung eine vorgegebene Eindringtiefe der Walzenelemente in die Bodenoberfläche und damit eine vorgegebene Verfestigung des Bodens gewährleistet. Das erfindungsgemäß vorgesehene erste elastische Element bewirkt eine Vorspannung des Walzenelementes nach unten, so daß dieses durch die Vorspannkraft des ersten elastischen Elementes dann nach unten gedrückt wird, wenn das Walzenelement in den Bereich einer Senke gelangt. Erfindungsgemäß wird somit die Möglichkeit geschaffen, den Tragarm sowohl nach oben als auch nach unten zu verschwenken, während gleichzeitig in der Normalstellung des Tragarmes eine durch das Walzenelement aufgebrachte Abstützung der gesamten Kombination erfolgt. Dies wird erfindungsgemäß dadurch realisiert, daß der die Aufwärtsbewegung des Walzenelementes begrenzende Anschlag eine vorgegebene Abstützkraft aufweist, welche bei einer stärkeren Beanspruchung überwindbar ist.

Zur Abstützung des erfindungsgemäßen Walzenelementes bieten sich verschiedene Möglichkeiten an. Die erste Möglichkeit besteht erfindungsgemäß darin, daß der Anschlag in Form eines zweiten elastischen Elementes ausgebildet ist. Sobald auf das Walzenelement eine nach oben gerichtete Kraft aufgebracht ist, welche größer ist, als die Vorspannkraft des zweiten elastischen Elementes, kann das Walzenelement nach oben ausweichen, beispielsweise bei einem Auftreffen auf Steine.

In einer besonders günstigen Ausgestaltung der Erfindung ist vorgesehen, daß der Vorspannweg des zweiten elastischen Elementes begrenzt und geringer ist, als der Gesamtweg des ersten elastischen Elementes. Durch diese Maßnahme wird sichergestellt, daß eine nach unten gerichtete Verschwenkbewegung des Tragarmes und damit des Walzenelementes nur durch das erste elastische Element erfolgt, nicht jedoch durch die zusätzliche Wirkung des zweiten elastischen Elementes. Dadurch wird bewirkt ,daß das Walzenelement bei Auftreffen auf eine Senke noch ausreichend stark belastet wird. Außerdem wird dadurch eine genau definierte Normalstellung gewährleistet.

In einer besonders günstigen Ausgestaltung ist weiterhin vorgesehen, daß das erste und/oder das zweite elastische Element mittels einer Einstellvorrichtung in ihrer Federkraft einstellbar sind. Durch diese Maßnahme kann eine besonders günstige Anpassung an unterschiedliche Bodenbeschaffenheiten o.ä. erfolgen.

Die Einstellvorrichtung kann beispielsweise einen gegen eine verstellbare Lagerung des ersten und/oder zweiten elastischen Elementes wirkenden, hydraulisch einstellbaren Exzenterkörper umfassen. Die Verwendung eines Exzenterkörpers hat den Vorteil, daß dieser, sofern er in der jeweiligen Stellung gehalten wird, einen festen Anschlag bildet, während der Exzenterkörper andererseits besonders einfach verstellbar ist.

Alternativ oder ergänzend hierzu ist es auch möglich, das zweite elastische Element einstellbar auszugestalten, beispielsweise unter Verwendung einer Schrauben-Mutternkombination, so daß die Lage des jeweiligen Walzenelementes voreinstellbar und justierbar ist. Durch die Schrauben-Mutternkombination läßt sich die Lage des durch das zweite elastische Element gebildeten Anschlages einstellen.

Eine andere, nicht erfindungsgemäße Möglichkeit zur Ausbildung des Anschlages besteht darin, daß dieser in Form beidseitig an dem Rahmen gelagerter Stützräder ausgestaltet ist. Die Stützräder können einen Teil der Gesamtlast des Bodenbearbeitungsgerätes aufnehmen, so daß eine Abstützung des Gesamtgewichtes im wesentlichen weiterhin durch die aus den Walzenelementen gebildete Walze erfolgt.

Eine weitere, nicht erfindungsgemäße Möglichkeit zur Ausgestaltung des Anschlages besteht darin, daß dieser in Form einer am dritten Tragarm gelagerten Krümelwalze ausgestaltet ist, welche, in Fahrtrichtung gesehen, hinter den Säscharen vorgesehen ist. Diese Krümelwalze stützt sich dann an dem Rahmen direkt ab.

Um bei dem erfindungsgemäßen Bodenbearbeitungsgerät auch eine Einstellbarkeit und damit eine gezielte Veränderbarkeit der Höhenlage der Säschare realisieren zu können, ist vorgesehen, daß das jeweilige Säschar höhenverstellbar an einem schwenkbar gelagerten zweiten Tragarm gelagert ist. Durch eine Verschwenkung des zweiten Tragarmes ändert sich die Eindringtiefe des Säschares in den durch das Walzenelement vorverdichteten Boden.

In günstiger Weise ist der Tragarm des Säschares mit zumindest einem dritten elastischen Element nach unten vorgespannt, um auf diese Weise ein Nachführen des Säschares durch eine Senke zu ermöglichen. Dabei kann es weiterhin vorteilhaft sein, wenn eine nach oben gerichtete Begrenzung der Schwenkbewegung des zweiten Tragarmes durch einen in Form eines vierten elastischen Elementes ausgebildeten Anschlag begrenzt ist, welcher ähnlich dem zweiten elastischen Element des Tragarmes des Walzenelementes trotzdem eine nach oben gerichtete Schwenkbewegung ermöglicht, wenn eine ausreichende Kraft aufgebracht wird. Hierdurch wird sichergestellt, daß das Säschar Bodenhindernissen, beispielsweise Steinen, ausweichen kann, aber bei normalen Arbeitsbedingungen eine konstante Ablagetiefe beibehält.

Im folgenden wird die Erfindung anhand von Ausführungsbeispielen in Verbindung mit der Zeichnung beschrieben. Dabei zeigt:
- Fig. 1: eine schematische Seitenansicht eines ersten Ausführungsbeispiels des erfindungsgemäßen Bodenbearbeitungsgerätes,
- Fig. 2: eine Teilansicht eines weiteren Ausführungsbeispiels, ähnlich der Darstellung in Fig. 1,
- Fig. 3: eine Teil-Seitenansicht eines weiteren nicht erfindungsgemäßen Beispiels,
- Fig. 4: eine weitere Teil-Seitenansicht eines weiteren nicht erfindungsgemäßen Beispiels und
- Fig. 5: eine vereinfachte Teil-Draufsicht auf das erfindungsgemäße Bodenbearbeitungsgerät.

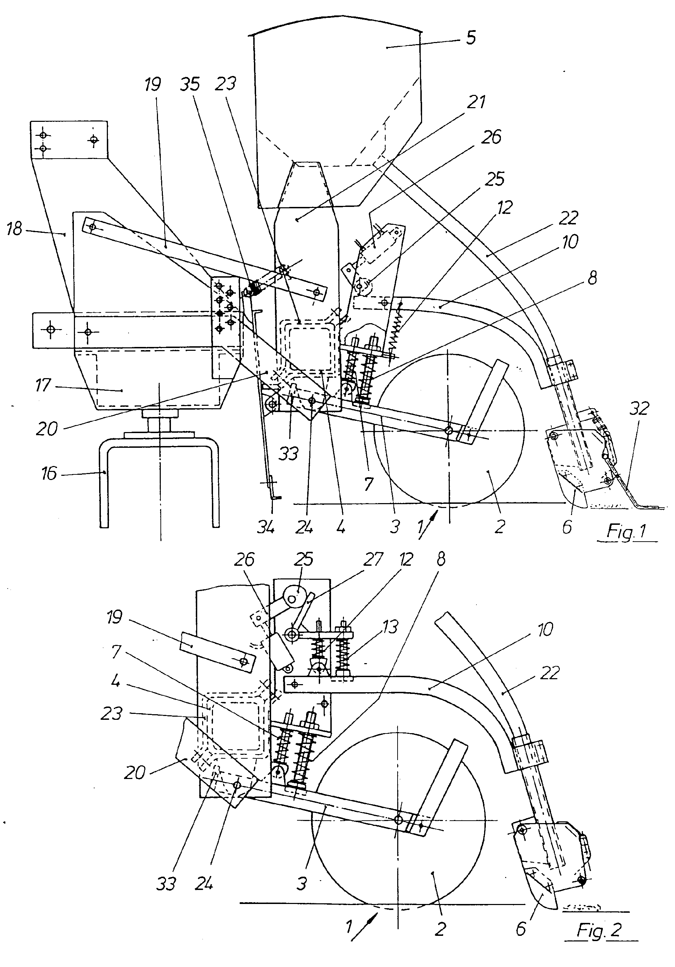

Die schematische Seitenansicht der Fig. 1 zeigt ein erstes Ausführungsbeispiel des erfindungsgemäßen Bodenbearbeitungsgerätes. Dieses umfaßt in Kombination ein in Form einer Kreiselegge 16 ausgebildetes Vorgerät, dessen Kastenbalken 17 mittels eines Turms 18 an einem Schlepper anlenkbar ist.

Über obere Lenker 19 und untere Lenker 20, welche eine Parallel-Lenkeranordnung bilden, sind Seitenplatten 21 gelagert, an welchen ein in Form eines Vierkantprofils ausgebildeter Rahmen 4 befestigt ist. Die Seitenplatten 21 tragen an ihren oberen Bereichen eine Sämaschine 5, welche über Schläuche 22 mit einer Vielzahl von Säscharen 6 verbunden ist. Die Sämaschine 5 ist nur in vereinfachter Darstellung gezeigt.

Das Bodenbearbeitungsgerät umfaßt weiterhin eine Walze 1, welche aus einer Vielzahl nebeneinander angeordneter, radartiger Walzenelemente aufgebaut ist. Diese sind jeweils über einen beispielsweise gabelförmig ausgeführten ersten Tragarm 3 verschwenkbar an dem Rahmen 4 gelagert, wobei die Lagerung der ersten Tragarme 3 über ein Klemmelement 23 erfolgt, mit Hilfe dessen eine seitliche Verstellung der Walzenelemente einschließlich der Säschare 6 möglich ist. Weiterhin lassen sich dadurch die Abstände zwischen den einzelenen Walzenelementen bzw. den Säscharen 6 variieren.

Erfindungsgemäß ist der erste Tragarm 3 des Walzenelementes 2, welcher um eine Achse 24 verschwenkbar ist, mittels eines ersten elastischen Elementes 7 nach unten vorgespannt. Der erste Tragarm 3 ist in der in Fig. 1 gezeigten Arbeitsstellung gegen einen Anschlag abgestützt, welcher durch ein zweites elastisches Element 8 gebildet wird, welches in Form einer Druckfeder ausgestaltet ist, welche einen verschiebbaren Bolzen umgibt. In der in Fig. 1 gezeigten Stellung wird somit die nach oben gerichtete Bewegung des Walzenelementes 2 durch das zweite elastische Element 8 begrenzt, während bei Auftreten nach oben gerichteter Kräfte, welche größer sind als die Vorspannkraft des zweiten elastischen Elementes 8, das Walzenelement 2 nach oben-ausweichen kann.

Weiterhin ist ebenfalls über das Klemmelement 23 an dem Rahmen 4 ein zweiter Tragarm 10 gelagert, welcher an seinem freien Ende das Säschar 6 trägt. Mittels eines dritten elastischen Elementes 12 ist das Säschar 6 nach unten vorgespannt. Um die Arbeitstiefe des Säschares einjustieren zu können, ist ein Exzenter 25 vorgesehen, welcher an dem Rahmen 4 gelagert ist und einen Anschlag bildet. Die Stellung des Exzenters 25 ist über einen Hydrauliktrieb 26 einstellbar. Der Exzenter 25 kann auch in Form einer Exzenterwelle ausgebildet sein, welche sich quer über die gesamte Arbeitsbreite des Bodenbearbeitungsgerätes erstreckt, so daß sämtliche Säscharen 6 gleichzeitig und synchron einstellbar sind.

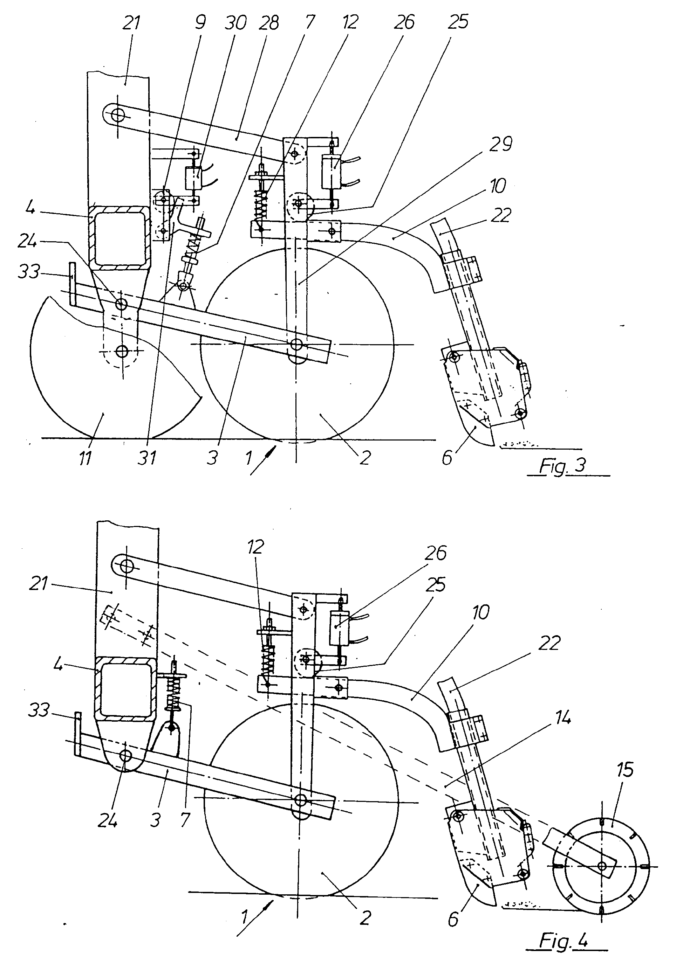

Die in Fig. 2 gezeigte Variante des Ausführungsbeispiels gemäß Fig. 1 unterscheidet sich von dieser dadurch, daß der zweite Tragarm 10, welcher das Säschar 6 trägt, über eine Abstützeinrichtung abgestützt ist, welche den elastischen Elementen 7 und 8 gleich ist. Infolge dessen ist zusätzlich zu dem dritten elastischen Element 12 ein viertes elastisches Element 13 vorgesehen, welches, ähnlich dem zweiten elastischen Element 8 als Anschlag dient und in der normalen Betriebsstellung eine Begrenzung der Bewegung des Säschares 6 nach oben bildet. Eine Einstellung der Arbeitstiefe der Säscharen 6 erfolgt auch hier über ein Exzenter 25, welches mittels eines Hydraulikantriebes 26 betätigbar ist. Die beiden elastischen Elemente 12 und 13 sind hierbei gegen ein verschwenkbares Lagerelement 27 abgestützt.

Im übrigen sind gleiche Bauelemente mit gleichen Bezugszeichen versehen.

Die Fig. 3 zeigt ein alternatives, nicht erfindungsgemäßes, Beispiel, bei welcher die Walze 1 zusätzlich zu der Lagerung mittels des ersten Tragarmes 3 durch obere Lenker 28 gelagert ist, welche zusammen mit dem unteren, ersten Tragarm 3 und der Seitenplatte 21 eine Parallelogramm-Lenkeranordnung bildet, wobei ein im wesentlichen vertikaler Träger 29 vorgesehen ist. An diesem ist der zweite Tragarm 10, welcher das Säschar 6 trägt, gelagert. Der wesentliche Unterschied dieses Ausführungsbeispiels besteht jedoch darin, daß seitliche Stützräder 11 vorgesehen sind, welche einen Teil der Gesamtlast des Bodenbearbeitungsgerätes, beispielsweise 10 % übernehmen und somit als Anschlag dienen, welcher in der normalen Arbeitsposition eine nach oben gerichtete Bewegung der Walzenelemente 2 aufnimmt. Im übrigen sind gleiche Bauelemente wiederum mit gleichen Bezugsziffern versehen.

Weiterhin zeigt die Fig. 3 eine Verstellbarkeit der Lage des ersten Tragarmes 3 mittels eines Exzenterkörpers 9, welcher mittels eines Hydraulikantriebs 30 betätigbar ist und mit einem schwenkbar angebrachten Lagerelement 31 zusammenwirkt, welches wiederum das erste elastische Element 7 lagert. Durch eine Verschwenkung des Lagerelementes 31 ist somit die Vorspannkraft des ersten elastischen Elementes 7 veränderbar.

Die Fig. 4 zeigt ein weiteres nicht erfindungsgemäßes Beispiel, bei welchem eine nachgeordnete Krümelwalze 15 mittels dritter Tragarme 14 an dem Rahmen 4 bzw. an dessen Seitenplatten 21 gelagert ist. Im übrigen ähnelt dieses Ausführungsbeispiel dem in Fig. 3 gezeigten Ausführungsbeispiel, gleiche Bauelemente wurden wiederum mit gleichen Bezugszeichen versehen. Auch hierbei ist es möglich, die Arbeitstiefe der Säschare 6 durch Verdrehung der Exzenter 25 (Exzenterwelle) einzustellen. Die Krümelwalze 15 trägt auch hier wiederum einen Teil der Gesamtlast, beispielsweise 10 %, während die restlichen 90 % von der Walze 1 aufgenommen werden.

Bei den Beispielen nach Figur 3 und 4 bleibt die genaue Höhenlage des Säschares gegenüber dem Walzenelement auch dann erhalten, wenn dieses eine Aufwärts- oder Abwärtsbewegung macht.

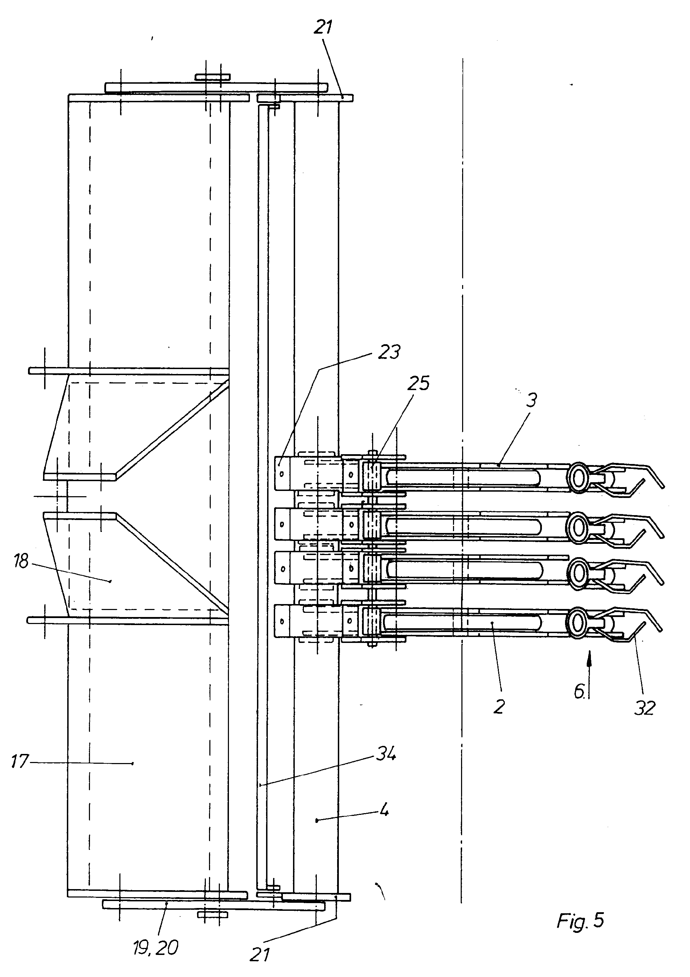

Aus der Darstellung gemäß Fig. 5 ist in der Draufsicht zu ersehen, daß die Walzenelemente 2 und die zugeordneten Säschare 6 jeweils eine Einheit bilden, welche längs des Rahmens 4 verstellbar ist, so daß sich insgesamt die Arbeitsbreite einjustieren läßt.

Bei den gezeigten Beispielen ist es weiterhin möglich, dem Säschar einen Zustreicher 32 folgen zu lassen. Weiterhin kann an dem vorderen Ende des ersten Tragarmes 3 ein zusätzlicher Anschlagkörper 33 angebracht sein, welcher bei entsprechender Verschwenkung gegen den Rahmen 4 anliegt und eine nach unten gerichtete Bewegung des ersten Tragarmes 3 begrenzt. Vor der Walze 2 kann weiterhin eine Planierplatte 34 gelagert sein, welche, wie in Fig. 1 gezeigt, schwenkbar an dem Rahmen 4 angebracht und mittels eines elastischen Elementes 35 vorgespannt ist.

Die Erfindung ist nicht auf die gezeigten Ausführungsbeispiele beschränkt, vielmehr ergeben sich im Rahmen der Erfindung gemäß dem Patentanspruch 1 für den Fachmann vielfältige Abwandlungs- und Modifikationsmöglichkeiten.

## Patentansprüche

1. Bodenbearbeitungsgerät mit einer Walze (1), welche mehrere radartige Walzenelemente (2) umfaßt, welche jeweils mittels eines ersten, schwenkbar gelagerten Tragarmes (3) höhenveränderbar an einem Rahmen (4) gelagert sind, und mit einer nachgeordneten, mit Säscharen (6) versehenen Sämaschine (5), wobei der erste Tragarm (3) mittels zumindest eines ersten elastischen Elementes (7) nach unten vorgespannt ist, wobei an dem Rahmen (4) ein eine Aufwärtsbewegung des Walzenelementes (2) begrenzender Anschlag angeordnet ist und der Anschlag durch die Aufwärtsbewegung des Walzenelementes (2) überwindbar ist, wenn dabei eine Abstützkraft für den Anschlag übertroffen wird, die diesen konstant gegen die Anschlagrichtung belastet, dadurch gekennzeichnet, daß der Anschlag in Form eines zweiten elastischen Elementes (8) ausgebildet ist, das gleichsinnig mit dem ersten elastischen Element (7) wirkt.

2. Bodenbearbeitungsgerät nach Anspruch 3, dadurch gekennzeichnet, daß der Vorspannweg des zweiten elastischen Elementes (8) begrenzt und geringer als der Weg des ersten elastischen Elementes (7) ist.

3. Bodenbearbeitungsgerät nach Anspruch 1 oder 2, dadurch gekennzeichnet, daß das erste (7) und/oder das zweite (8) elastische Element mittels einer Einstellvorrichtung zur Einstellung der Arbeitstiefe des Walzenelementes (2) in ihrer Federkraft einstellbar sind.

4. Bodenbearbeitungsgerät nach Anspruch 3, dadurch gekennzeichnet, daß die Einstellvorrichtung eine gegen eine verstellbare Lagerung des ersten (7) und/oder zweiten (8) elastischen Elementes wirkenden, hydraulisch einstellbaren Exzenterkörper (9) umfaßt.

5. Bodenbearbeitungsgerät nach einem der Ansprüche 1 - 4, dadurch gekennzeichnet, daß das zweite elastische Element (8) einstellbar ist.

6. Bodenbearbeitungsgerät nach einem der Ansprüche 1 - 5, dadurch gekennzeichnet, daß das Säschar (6) höhenverstellbar an einem schwenkbar gelagerten zweiten Tragarm (10) gelagert ist.

7. Bodenbearbeitungsgerät nach Anspruch 6, dadurch gekennzeichnet, daß der Tragarm (10) des Säschares (6) mittels zumindest einem dritten elastischen Element (12) nach unten vorgespannt ist.

8. Bodenbearbeitungsgerät nach Anspruch 6 oder 7, dadurch gekennzeichnet, daß eine nach oben gerichtete Begrenzung der Schwenkbewegung des zweiten Tragarmes (10) durch einen in Form eines vierten elastischen Elementes (13) ausgebildeten Anschlag begrenzt ist.

9. Bodenbearbeitungsgerät nach Anspruch 8, dadurch gekennzeichnet, daß das dritte (12) und/oder das vierte (13) elastische Element einstellbar ausgebildet sind.

## Claims

1. A cultivation implement having a roller (1) comprising a plurality of wheel-like roller elements (2) which are each mounted in a vertically adjustable manner on a frame (4) by means of a first, pivotably mounted supporting arm (3), and having a sowing machine (5) subsequently arranged and provided with coulters (6), wherein the first supporting arm (3) is prestressed downwards by means of at least one first resilient element (7), wherein a stop restricting an upward movement of the roller element (2) is arranged on the frame (4) and wherein the stop can be overcome by the upward movement of the roller element (2) if a supporting force for the stop is exceeded, the said supporting force constantly loading the stop contrary to the stopping direction, characterised in that the stop is designed in the form of a second resilient element (8) which acts in the same direction as the first resilient element (7).

2. A cultivation implement according to claim 3 [sic], characterised in that the prestressing path of the second resilient element (8) is restricted and smaller than the path of the first resilient element (7).

3. A cultivation implement according to claim 1 or 2, characterised in that the spring tension of the first (7) and/or the second (8) resilient element can be adjusted by means of an adjusting device for adjusting the operating depth of the roller element (2).

4. A cultivation implement according to claim 3, characterised in that the adjusting device comprises a hydraulically adjustable eccentric body (9) acting against an adjustable mounting of the first (7) and/or second (8) resilient element.

5. A cultivation implement according to any one of claims 1 to 4, characterised in that the second resilient element (8) is adjustable.

6. A cultivation implement according to any one of claims 1 to 5, characterised in that the coulter (6) is mounted on a pivotably mounted second supporting arm (10) in a vertically adjustable manner.

7. A cultivation implement according to claim 6, characterised in that the supporting arm (10) of the coulter (6) is prestressed downwards by means of at least one third resilient element (12).

8. A cultivation implement according to claim 6 or 7, characterised in that a restriction of the upward pivoting movement of the second supporting arm (10) is restricted by a stop designed in the form of a fourth resilient element (13).

9. A cultivation implement according to claim 8, characterised in that the third (12) and/or fourth (13) resilient element are adjustably designed.

## Revendications

1. Machine à travailler le sol, comportant un rouleau (1), qui comprend plusieurs éléments de rouleau (2) se présentant comme des roues, celles-ci étant chacune montées, réglables en hauteur, sur un cadre (4) au moyen d'un premier bras porteur (3) monté pivotant, et comportant un semoir (5), disposé derrière et muni de socs de semoirs (6), le premier bras porteur (3) étant soumis à une précontrainte vers le bas au moyen d'au moins un premier organe élastique (7), étant entendu que, sur le cadre (4), est disposée une butée limitant le mouvement vers le haut de l'élément de rouleau (2) et que la butée peut être franchie par le mouvement vers le haut si on dépasse une force d'appui pour la butée, soumettant cette dernière à un effort constant appliqué dans le sens s'opposant à la butée, caractérisée en ce que la butée est réalisée sous la forme d'un deuxième organe élastique (8) agissant dans le même sens que le premier organe élastique (7).

2. Machine à travailler le sol suivant la revendication 1, caractérisée en ce que la course de contrainte du deuxième organe élastique (8) est limitée, et est plus faible que la course du premier organe élastique (7).

3. Machine à travailler le sol suivant la revendication 1 ou la revendication 2, caractérisée en ce que le premier organe élastique (7) et/ou le deuxième organe élastique (8) sont réglables, par la force de leur ressort, au moyen d'un dispositif de réglage destiné à régler la profondeur de travail de l'élément de rouleau (2).

4. Machine à travailler le sol suivant la revendication 3, caractérisée en ce que le dispositif de réglage comporte un corps excentrique (9) réglable hydrauliquement, agissant de façon antagoniste contre la position réglable du premier organe élastique (7) et/ou du deuxième organe élastique (8).

5. Machine à travailler le sol suivant l'une quelconque des revendications 1 à 4, caractérisée en ce que le deuxième organe élastique (8) est réglable.

6. Machine à travailler le sol suivant l'une quelconque des revendications 1 à 5, caractérisée en ce que le soc de semoir (6) est monté réglable en hauteur sur un deuxième bras support (10), monté pivotant.

7. Machine à travailler le sol suivant la revendication 6, caractérisée en ce que le bras support (10) du soc de semoir (6) est soumis à une précontrainte vers le bas au moyen d'au moins un troisième organe élastique (12).

8. Machine à travailler le sol suivant la revendication 6 ou la revendication 7, caractérisée en ce qu'une limitation vers le haut du mouvement de pivotement du deuxième bras support (10) est réalisée au moyen d'une butée exécutée sous la forme d'un quatrième organe élastique (13).

9. Machine à travailler le sol suivant la revendication 8, caractérisée en ce que le troisième organe élastique (12) et/ou le quatrième organe élastique (13) sont réalisés de façon à pouvoir être réglés.
